# EUROPÄISCHE PATENTSCHRIFT

(11) **EP 2 711 216 B1**
(45) Veröffentlichungstag und Bekanntmachung des Hinweises auf die Patenterteilung: **18.03.2020**
(21) Anmeldenummer: 13002064.7
(22) Anmeldetag: 19.04.2013
(51) Int. Cl.: B60H 1/00, B60H 1/26, B60H 3/06

(54) **Ansaugeinrichtung für eine Heizungs- und/oder Klimaanlage in einem Kraftfahrzeug, insbesondere in einem Nutzfahrzeug**
Suction device for a heating and/or air conditioning device in a motor vehicle, in particular a commercial vehicle
Dispositif d'aspiration pour une installation de chauffage et/ou de climatisation dans un véhicule automobile, notamment dans un véhicule utilitaire

(30) Priorität: 21.09.2012 DE 102012018729
(43) Veröffentlichungstag der Anmeldung: 26.03.2014
(73) Patentinhaber: MAN Truck & Bus SE, 80995 München (DE)
(72) Erfinder: Rohrmüller, Hans, 82216 Maisach (DE); Gerlach, Günter, 85757 Karlsfeld (DE); Fass, Michael, 80335 München (DE)
(74) Vertreter: Liebl, Thomas

(56) Entgegenhaltungen:
- EP-A1- 0 125 562
- EP-A1- 0 125 620
- DE-U- 1 808 206
- FR-A1- 2 870 787

## Beschreibung

Die vorliegende Erfindung betrifft ein Nutzfahrzeug mit einer Ansaugeinrichtung für eine Heizungs- und/oder Klimaanlage gemäß dem Oberbegriff des Patentanspruchs 1.

Bei Heizungs- und/oder Klimaanlagen in Kraftfahrzeugen ist es allgemein bekannt, die dem Fahrzeuginnenraum zugeführte, konditionierte Außenluft zu filtern, zumeist werden dazu plattenförmige Feinfilter verwendet. Ferner sind in der Regel stromauf dazu im Ansaugbereich der Außenluft Einströmgitter vorgesehen, die größere Gegenstände wie zum Beispiel Blätter von Pflanzen oder Bäumen, etc. von der Anlage fernhalten.

Aus der FR 2 870 787 A1 ist ein gattungsgemäßes Nutzfahrzeug bekannt. Aus der EP 0 125 562 A1 ist eine Luftversorgungsvorrichtung für die Fahrerkabine eines Fahrzeugs bekannt. Aus der EP 0 125 620 A1 ist ein Luftfiltersystem bekannt.

Aufgabe der Erfindung ist es, ein Nutzfahrzeug mit einer Ansaugeinrichtung für eine Heizungs- und/oder Klimaanlage vorzuschlagen, die baulich einfach ausgeführt ist und die eine problemlose, sehr wirkungsvolle Vorfilterung der angesaugten Außenluft ermöglicht.

Die Lösung dieser Aufgabe gelingt mit den Merkmalen des Patentanspruchs 1. Vorteilhafte Weiterbildungen und Ausgestaltungen der Erfindung sind in den abhängigen Ansprüchen angeführt.

Erfindungsgemäß wird vorgeschlagen, dass der Filtereinrichtung der Heizungs- und/oder Klimaanlage ein Fliehkraftabscheider, nämlich ein Zyklonfilter als Vorfilter zur Vorabscheidung von definierten, in der Ansaugluft enthaltenen Verunreinigungen und/oder Partikeln vorgeschaltet ist. Ein derartiger Fliehkraftabscheider bzw. Zyklonfilter bewirkt dauerhaft eine zuverlässige Abscheidung von in der Außenluft enthaltenen Partikeln in fester oder flüssiger Form, wodurch sowohl die stromab liegende Filtereinrichtung, die regelmäßig als Feinfilter ausgebildet ist, geschützt als auch der Reinigungswirkungsgrad der Anlage insgesamt erhöht werden kann. Selbstverständlich kann auch dem Zyklonfilter, der im Übrigen bekannter Bauart sein kann, ein Einströmgitter vorgeschaltet sein.

Der Zyklonfilter ist in einem luftführenden Gehäuse mit wenigstens einer Einströmöffnung und mit wenigstens einer mit der Heizungs- und/oder Klimaanlage strömungsverbundenen Abströmöffnung angeordnet. Dadurch handelt es sich um ein separat handhabbares Bauteil, das entsprechend flexibel verbaut und eingesetzt werden kann. Besonders bevorzugt ist am Gehäuse zudem eine Partikel-Abscheidevorrichtung vorgesehen und/oder ausgebildet, die bevorzugt an der geodätisch tiefsten Stelle positioniert ist, an der sich schwerkraftbedingt die abgeschiedenen Partikel ablagern und von dort gegebenenfalls automatisch ausgeschieden werden können. Damit können die abgeschiedenen Verunreinigungen bzw. Partikel sehr gut und schnell aus dem Fliehkraftabscheider entfernt werden.

Ferner ist der Zyklonfilter Bestandteil einer lösbar und austauschbar gehalterten Baueinheit und ist dieser durch eine in das luftführende Gehäuse eingesetzte Kartusche gebildet. Ein derartiger Aufbau kann fertigungstechnisch günstig im Zusammenwirken mit dem umgebenden Gehäuse die spiralförmigen, die Rotation der einströmenden Außenluft bewirkenden Luftführungen bzw. Kanäle bilden.

Physikalisch vorteilhaft ist der Fliehkraftabscheider in Einbaulage im Kraftfahrzeug bevorzugt im Wesentlichen vertikal ausgerichtet, wobei eine gegebenenfalls vorgesehene Abscheidevorrichtung dann besonders einfach und vorteilhaft an der geodätisch tiefsten Stelle positioniert werden kann.

In einer weiteren, vorteilhaften Ausgestaltung der Erfindung kann an einem den Fliehkraftabscheider umschließenden und die Einströmöffnung aufweisenden Gehäuseabschnitt des Gehäuses ein die Ausströmöffnung aufweisender Gehäuseabschnitt geringeren Querschnitts als Luftberuhigungsstrecke angeschlossen sein. Daraus resultiert eine Strömungsberuhigung der Außenluft mit die Luftförderung der Heizungs- und/oder Klimaanlage nur unwesentlich beeinträchtigendem Strömungswiderstand.

Des Weiteren wird vorgeschlagen, dass der Fliehkraftabscheider oder ein den Fliehkraftabscheider aufnehmendes luftführendes Gehäuse hinter einem Frontverkleidungsteil des Nutzfahrzeugs, nämlich hinter einer Bugschürze des Nutzfahrzeugs, angeordnet ist. Dies stellt eine besonders günstige, gegebenenfalls durch den Fahrtwind eines Kraftfahrzeugs unterstützte Einströmung der Umgebungs- bzw. Außenluft sicher.

In einer vorteilhaften Ausgestaltung der Erfindung können des Weiteren der Fliehkraftabscheider bzw. Zyklonfilter und das luftführende Gehäuse unmittelbar an eine Bauteile der Heizungs- und/oder Klimaanlage aufnehmende Baueinheit angebaut sein und somit als eine Montageeinheit im Kraftfahrzeug verbaut werden. Schließlich kann auch diese Baueinheit der Heizungs- und/oder Klimaanlage gemäß einer bevorzugten Ausgestaltung hinter der Bugschürze eines Kraftfahrzeugs angeordnet sein, so dass das luftführende Gehäuse mit dem Fliehkraftabscheider unmittelbar an die Baueinheit angebaut ist und/oder mit diesem eine Montageinheit bildet.

Ein Ausführungsbeispiel der Erfindung ist im Folgenden mit weiteren Einzelheiten näher beschrieben.

Es zeigen:
- Fig. 1: in skizzenhafter Darstellung eine Frontansicht auf eine hinter einer Bugschürze eines Nutzkraftfahrzeugs angeordnete Klimaanlage mit einer Ansaugeinrichtung für Außenluft und einem in einem Luftführungsgehäuse angeordneten Zyklonfilter als Fliehkraftabscheider;
- Fig. 2: eine Ansicht von schräg vorne auf die Ansaugeinrichtung mit dem Zyklonfilter und dem Kasten der Klimaanlage nach Fig. 1; und
- Fig. 3: einen Längsschnitt durch die Ansaugeinrichtung gemäß den Fig. 1 und 2 mit dem Zyklonfilter und dem diesen umgebenden Gehäuse.

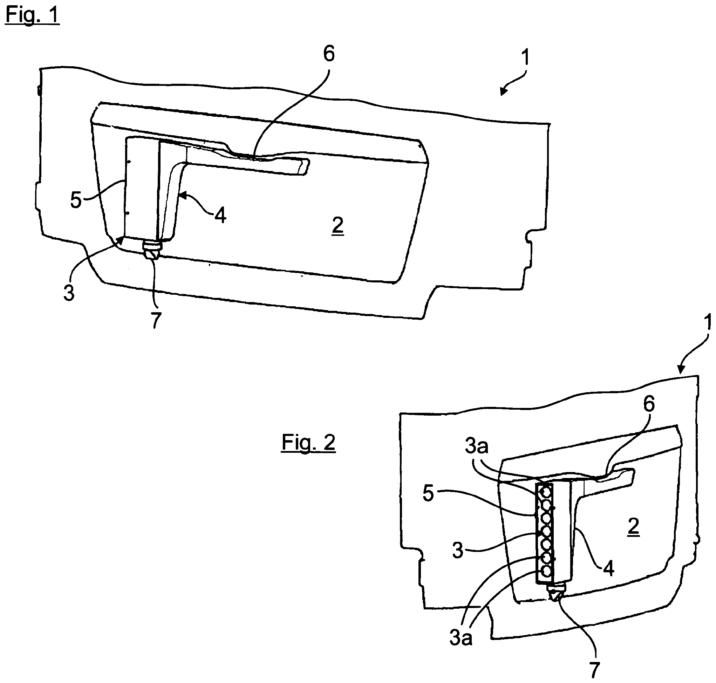

In den Fig. 1 und 2 ist eine nur angedeutete Bugschürze 1 eines nicht weiter dargestellten Nutzkraftfahrzeugs bezeichnet, hinter der eine Bauteile einer Klima- und/oder Heizungsanlage tragende Baueinheit 2 angeordnet ist.

In der Baueinheit 2 können zum Beispiel ein elektrisches Gebläse, ein Wärmetauscher, ein Verdampfer, ein Feinfilter, Luftleitelemente, etc. angeordnet sein, über die einem Fahrzeuginnenraum gefilterte und konditionierte Außenluft zuführbar ist.

Der Baueinheit 2 bzw. der Heizungs- und/oder Klimaanlage vorgeschaltet ist als Ansaugeinrichtung ein Zyklonfilter 3 mit einem diesen umgebenden Gehäuse 4.

Das Gehäuse 4 weist eine Einströmöffnung (bei 5), eine mit der Klimaanlage luftführend verbundene Abströmöffnung (bei 6) und eine Abscheidevorrichtung 7 auf, wobei, wie ersichtlich, die Abscheidevorrichtung 7 an der geodätisch tiefsten Stelle des vertikal ausgerichteten Zyklonfilters 3 positioniert ist.

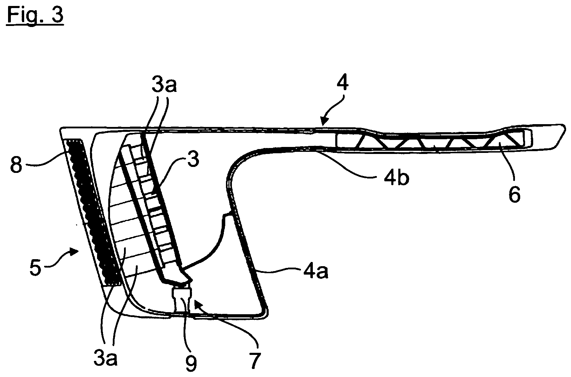

Die Fig. 3 zeigt in einem Längsschnitt das Gehäuse 4 des Zyklonfilters 3, das sich aus einem den Zyklonfilter 3 umschließenden Gehäuseabschnitt 4a und einem im Querschnitt geringerem und geradlinigen, eine Luftberuhigungsstrecke bildenden Gehäuseabschnitt 4b zusammensetzt, das sich hier beispielhaft an einen, im montierten Zustand oberen Bereich des Gehäuseabschnitts 4a anschließt.

Dabei weist der Gehäuseabschnitt 4a in einem seitlichen Bereich die zum Beispiel durch ein Einströmgitter 8 abgedeckte Einströmöffnung 5 und im unteren Bereich die Abscheidevorrichtung 7 auf. Die nach unten offene Abscheidevorrichtung 7 kann zum Beispiel mit einem Flatterventil 9 versehen sein, das unter Schwerkrafteinfluss zur automatischen Abscheidung von Partikeln öffnet und durch Unterdruck im Ansaugbetrieb schließt.

Über die Einströmöffnung 5 strömt die Außenluft in die spiralförmigen Kanäle 3a des als austauschbare Kartusche in das Gehäuse 4 eingesetzten Zyklonfilters 3 ein und wird dort in an sich bekannter Weise in starke Rotation versetzt, wobei sich in der Außenluft befindliche Partikel an der Außenwand des Gehäuseabschnitts 4a ablagern und nach unten zur Abscheidevorrichtung 7 abgeführt werden.

Von dem Gehäuseabschnitt 4a aus wird die noch turbulente Außenluft der strömungsberuhigenden Strecke bzw. dem Gehäuseabschnitt 4b zugeführt und schließlich über die dort befindliche Ausströmöffnung 6 in die Klimaanlage 2 weiter- bzw. eingeleitet.

Das Gehäuse 4 mit dem Zyklonfilter 3, der Einströmöffnung 5, der Ausströmöffnung 6 und der Abscheidevorrichtung 7 ist an die Baueinheit 2 der Klimaanlage unmittelbar angebaut und bildet mit dieser eine Montageeinheit, die als Ganzes einfach in das Kraftfahrzeug hinter dessen Bugschürze 1 einbaubar ist.

Das Gehäuse 4 mit dem als austauschbare Kartusche ausgebildeten Zyklonfilter 3 kann fertigungstechnisch einfach und gewichtsgünstig in Kunststoffbauweise hergestellt sein.

### Bezugszeichenliste

- 1: Bugschürze
- 2: Kasten Klimaanlage
- 3: Zyklonfilter
- 3a: Spiralkanäle
- 4: Gehäuse
- 4a: Gehäuseabschnitt
- 4b: Gehäuseabschnitt
- 5: Einströmöffnung
- 6: Ausströmöffnung
- 7: Abscheidevorrichtung
- 8: Einströmgitter
- 9: Flatterventil

## Patentansprüche

1. Nutzfahrzeug mit einer Ansaugeinrichtung für eine Heizungs- und/oder Klimaanlage (2), die über wenigstens eine luftführende Leitung als Ansaugluft Außenluft ansaugt und über eine Filtereinrichtung der Heizungs- und/oder Klimaanlage (2) dem Fahrzeuginnenraum als gefilterte Luft zuführt, wobei der Filtereinrichtung der Heizungs- und/oder Klimaanlage (2) ein Zyklonfilter (3) als Vorfilter zur Vorabscheidung von, in der Ansaugluft enthaltenen Verunreinigungen und/oder Partikeln vorgeschaltet ist, wobei der Zyklonfilter (3) in einem luftführenden Gehäuse (4) mit wenigstens einer Einströmöffnung (5) und mit wenigstens einer mit der Heizungs- und/oder Klimaanlage (2) strömungsverbundenen Abströmöffnung (6) angeordnet ist, und wobei der Zyklonfilter (3) Bestandteil einer lösbar und austauschbar gehalterten Baueinheit ist, **dadurch gekennzeichnet, dass**
der Zyklonfilter (3) und das den Zyklonfilter (3) aufnehmende luftführende Gehäuse (4) hinter oder vor einer, ein Frontverkleidungsteil des Nutzfahrzeugs bildenden Bugschürze (1) derart angeordnet ist, dass eine durch den Fahrtwind des Nutzfahrzeugs unterstützte Einströmung der Außenluft sichergestellt ist, und dass
der Zyklonfilter (3) durch eine in das luftführende Gehäuse (4) eingesetzte Kartusche gebildet ist.

2. Nutzfahrzeug nach Anspruch 1, **dadurch gekennzeichnet, dass** am Gehäuse (4) eine Partikel-Abscheidevorrichtung (7) ausgebildet und/oder angeordnet ist, wobei vorgesehen ist, dass die Abscheidevorrichtung (7) an der geodätisch tiefsten Stelle positioniert ist.

3. Nutzfahrzeug nach einem der vorhergehenden Ansprüche, **dadurch gekennzeichnet, dass** der Zyklonfilter (3) in seiner Einbaulage im Fahrzeug vertikal ausgerichtet ist.

4. Nutzfahrzeug nach einem der vorhergehenden Ansprüche, **dadurch gekennzeichnet, dass** an einem, den Zyklonfilter (3) umschließenden und die Einströmöffnung (5) aufweisenden Gehäuseabschnitt (4a) des Gehäuses (4) ein die Ausströmöffnung (6) aufweisender Gehäuseabschnitt (4b) geringeren Querschnitts als Luftberuhigungsstrecke angeschlossen ist.

5. Nutzfahrzeug nach einem der vorhergehenden Ansprüche, **dadurch gekennzeichnet, dass** der Zyklonfilter (3) und das luftführende Gehäuse (4) unmittelbar an eine, Bauteile der Heizungs- und/oder Klimaanlage (2) aufnehmende Baueinheit angebaut sind.

6. Nutzfahrzeug nach Anspruch 5, **dadurch gekennzeichnet, dass** die Baueinheit der Heizungs- und/oder Klimaanlage (2) hinter der Bugschürze (1) des Nutzfahrzeugs angeordnet ist, und dass das luftführende Gehäuse (4) mit dem Zyklonfilter (3) unmittelbar an die Baueinheit angebaut ist und/oder mit diesem eine Montageinheit bildet.

## Claims

1. Utility vehicle with a suction device for a heating and/or air-conditioning system (2), which suction device sucks up outside air as suction air via at least one air-conducting line and supplies said air via a filter device of the heating and/or air-conditioning system (2) as filtered air to the vehicle interior, wherein a cyclone filter (3) as a preliminary filter for pre-separation of impurities and/or particles contained in the suction air is connected upstream of the filter device of the heating and/or air-conditioning system (2), wherein the cyclone filter (3) is arranged in an air-conducting housing (4) with at least one inflow opening (5) and with at least one outflow opening (6) connected in terms of flow to the heating and/or air-conditioning system (2), and wherein the cyclone filter (3) is part of a constructional unit held in a releasable and exchangeable manner, **characterized in that** the cyclone filter (3) and the air-conducting housing (4) accommodating the cyclone filter (3) is arranged behind or in front of a front skirt (1) forming a front cladding part of the utility vehicle, in such a manner that an inflow of the outside air assisted by the headwind of the utility vehicle is ensured, and **in that** the cyclone filter (3) is formed by a cartridge inserted into the air-conducting housing (4).

2. Utility vehicle according to Claim 1, **characterized in that** a particle-separating device (7) is formed and/or arranged on the housing (4), wherein it is provided that the separating device (7) is positioned at the geodetically lowest point.

3. Utility vehicle according to either of the preceding claims, **characterized in that** the cyclone filter (3) is oriented vertically in its installed position in the vehicle.

4. Utility vehicle according to one of the preceding claims, **characterized in that** a housing portion (4b) having the outflow opening (6) and having a smaller cross section is connected as an air-calming section to a housing portion (4a) of the housing (4) that surrounds the cyclone filter (3) and has the inflow opening (5).

5. Utility vehicle according to one of the preceding claims, **characterized in that** the cyclone filter (3) and the air-conducting housing (4) are attached directly to a constructional unit accommodating components of the heating and/or air-conditioning system (2).

6. Utility vehicle according to Claim 5, **characterized in that** the constructional unit of the heating and/or air-conditioning system (2) is arranged behind the front skirt (1) of the utility vehicle, and **in that** the air-guiding housing (4) together with the cyclone filter (3) is attached directly to the constructional unit and/or forms an assembly unit therewith.

## Revendications

1. Véhicule utilitaire comprenant un dispositif d'aspiration pour une installation (2) de chauffage et/ou de climatisation, qui aspire de l'air extérieur en tant qu'air d'aspiration, par le biais d'au moins une conduite conduisant de l'air et qui l'achemine à l'habitacle du véhicule en tant qu'air filtré par le biais d'un dispositif de filtration de l'installation (2) de chauffage et/ou de climatisation, en amont du dispositif de filtration de l'installation (2) de chauffage et/ou de climatisation étant disposé un filtre cyclone (3) en tant que préfiltre pour la pré-séparation d'impuretés et/ou de particules contenues dans l'air d'aspiration, le filtre cyclone (3) étant disposé dans un boîtier (4) guidant l'air, comprenant au moins une ouverture d'afflux (5) et au moins une ouverture de sortie (6) en liaison fluidique avec l'installation (2) de chauffage et/ou de climatisation, et le filtre cyclone (3) faisant partie d'une unité structurelle fixée de manière amovible et remplaçable,
**caractérisé en ce que**
le filtre cyclone (3) et le boîtier (4) guidant l'air recevant le filtre cyclone (3) sont disposés derrière ou devant un tablier avant (1) formant une partie de l'habillage avant du véhicule utilitaire, de telle sorte qu'un afflux d'air extérieur supporté par le vent relatif du véhicule utilitaire soit assuré, et **en ce que**
le filtre cyclone (3) est formé par une cartouche insérée dans le boîtier (4) guidant l'air.

2. Véhicule utilitaire selon la revendication 1, **caractérisé en ce qu'**un dispositif de séparation de particules (7) est réalisé et/ou disposé au niveau du boîtier (4), le dispositif de séparation (7) étant prévu pour être positionné au niveau du point géodésique le plus bas.

3. Véhicule utilitaire selon l'une quelconque des revendications précédentes, **caractérisé en ce que** le filtre cyclone (3) est orienté verticalement dans sa position d'installation dans le véhicule.

4. Véhicule utilitaire selon l'une quelconque des revendications précédentes, **caractérisé en ce qu'**une portion de boîtier (4a) du boîtier (4) entourant le filtre cyclone (3) et présentant l'ouverture d'afflux (5) est raccordée à une portion de boîtier (4b) de plus faible section transversale présentant l'ouverture de sortie (6), servant de section de tranquillisation d'air.

5. Véhicule utilitaire selon l'une quelconque des revendications précédentes, **caractérisé en ce que** le filtre cyclone (3) et le boîtier (4) guidant l'air sont montés directement sur une unité structurelle recevant des composants de l'installation (2) de chauffage et/ou de climatisation.

6. Véhicule utilitaire selon la revendication 5, **caractérisé en ce que** l'unité structurelle de l'installation (2) de chauffage et/ou de climatisation est disposée derrière le tablier avant (1) du véhicule utilitaire et **en ce que** le boîtier (4) guidant l'air est monté avec le filtre cyclone (3) directement sur l'unité structurelle et/ou forme avec celui-ci une unité de montage.
